# EUROPÄISCHE PATENTSCHRIFT

(11) **EP 0 559 654 B1**
(45) Veröffentlichungstag und Bekanntmachung des Hinweises auf die Patenterteilung: **13.09.1995**
(21) Anmeldenummer: 91916978.9
(22) Anmeldetag: 23.09.1991
(51) Int. Cl.: B60T 8/66

(54) **VERFAHREN ZUM BLOCKIERGESCHÜTZTEN BREMSEN DER RÄDER EINES FAHRZEUGES**
PROCESS FOR ANTI-LOCK BRAKING OF THE WHEELS OF A VEHICLE
PROCESSUS DE FREINAGE SANS BLOCAGE DES ROUES D'UN VEHICULE

(43) Veröffentlichungstag der Anmeldung: 15.09.1993
(73) Patentinhaber: LUCAS INDUSTRIES PUBLIC LIMITED COMPANY, Solihull, West Midlands B91 3TX (GB)
(72) Erfinder: KAMPFMANN, Wolfgang, D-5401 Moselkern (DE); SCHMITT, Hubert, D-5405 Ochtendung (DE); VOGES, Dieter, D-5400 Koblenz (DE)
(74) Vertreter: von Hellfeld, Axel, Dr. Dipl.-Phys.
(86) Internationale Anmeldenummer: EP9101812
(87) Internationale Veröffentlichungsnummer: WO9305990

(56) Entgegenhaltungen:
- EP-A- 0 329 071
- DE-A- 3 345 729
- DE-C- 4 028 193
- GB-A- 2 151 732
- GB-A- 2 227 534

## Beschreibung

Die Erfindung betrifft ein Verfahren zum blockiergeschützten Bremsen der Räder eines Fahrzeuges, bei dem Bremsdruck in Abhängigkeit vom Schlupf und/oder der Drehgeschwindigkeitsänderung (positive oder negative Verzögerung) eines gebremsten Rades im Verhältnis zu zumindest einem Schwellenwert auf- oder abgebaut oder konstant gehalten wird, und bei dem während aufeinanderfolgender Regelzyklen der blockiergeschützten Bremsung die jeweiligen Wiederbeschleunigungen der gebremsten Räder gemessen werden um zur Unterdrückung insbesondere durch Schwingungen der Achse des Fahrzeuges auslösbarer unerwünschter Regelvorgänge den Schwellenwert zu variieren oder einen Abbau von Bremsdruck für eine vorgegebene Zeitspanne zu verhindern.

Bei blockiergeschützten Fahrzeug-Bremsanlagen wird die Drehung der einzelnen Räder des Fahrzeuges ständig verfolgt und es werden insbesondere der Schlupf der gebremsten Räder sowie ihre Verzögerung ermittelt, um eine Blockierneigung des Rades festzustellen und das Blockieren zu verhindern. Sobald der Radschlupf bzw. die Verzögerung eine Blockierneigung anzeigen, was dadurch festgestellt wird, daß bestimmte, vorgegebene Schwellenwerte bezüglich Schlupf und/oder Verzögerung überschritten werden, wird ein weiterer Anstieg des Druckes in der Bremse des betroffenen Rades beendet oder der Bremsdruck abgebaut.

Sobald das betroffene Rad aufgrund seiner Reibung mit der Fahrbahn wieder eine hinreichende Drehbeschleunigung erfahren hat, wird der Druck in der Bremse wieder erhöht, um mit dem Rad weitere Bremswirkung zu erzielen.

Bei der blockiergeschützten Regelung des Bremsdruckes geht es wesentlich darum, über alle Regelzyklen einer Bremsung die gebremsten Räder möglichst im günstigsten Bereich der bekannten Reibbeiwert/ Schlupf-Kurve laufen zu lassen.

Um eine Bremsung mit möglichst kurzem Bremsweg bei gleichzeitiger Lenkbarkeit des Fahrzeuges zu erreichen, sollte die Antiblockieranlage möglichst empfindlich und verzögerungsfrei auf Blockierneigung anzeigende Änderungen im Drehverhalten des gebremsten Rades reagieren. Hierzu wäre es erstrebenswert, die genannten Schwellenwerte möglichst empfindlich einzustellen, d.h. so, daß schon bei relativ geringen Änderungen des Rad-Drehverhaltens in Richtung auf eine Blockierneigung ein Regelzyklus mit einem Abbau des Bremsdruckes eingeleitet wird.

Einer empfindlichen Einstellung der Schwellenwerte steht aber entgegen, daß unter bestimmten, nicht unwahrscheinlichen Bedingungen gebremste Räder ein Drehverhalten zeigen können, das eine starke Drehverzögerung anzeigt, obwohl das Rad noch in einem gut bremsfähigen Zustand läuft. Diese Erscheinung ist gut bekannt und zum Beispiel in der DE-OS 33 45 729 eingehend beschrieben. Durch insbesondere Achsschwingungen können relativ große Differenzen zwischen der Fahrzeug- und der Radgeschwindigkeit auftreten, die einen instabilen Lauf des Rades vortäuschen und deshalb unerwünschte Regelvorgänge, d.h. einen unerwünschten Abbau des Bremsdruckes, auslösen können. Auch wenn das gebremste Rad in ein Schlagloch oder auf unregelmäßiger Fahrbahn fährt, kann zunächst eine ruckartige Drehbeschleunigung, gefolgt von einer starken Verzögerung, auftreten.

Derartige Achsschwingungen oder dergleichen können also dazu führen, daß eng eingestellte Schwellenwerte bezüglich der Drehverzögerung des Rades überschritten werden und ein unerwünschter Regelvorgang (Druckabbau am gebremsten Rad) eingeleitet wird, obwohl das Rad nicht blockiergefährdet ist.

In der gattungsbildenden DE-OS 33 45 729 wird zur Unterdrückung unerwünschter Regelvorgänge der für die Einleitung der Regelung maßgebliche Schwellenwert in Abhängigkeit von der Hochlaufbeschleunigung des geregelten Rades variiert. Hierzu wird die Hochlaufbeschleunigung des gebremsten Rades (also das Wiederanlaufen des Rades nach einer Verzögerung) ständig überwacht und dann, wenn die Hochlaufbeschleunigung einen vorgegebenen Grenzwert überschreitet, wird der für die Einleitung eines Regelvorganges, d.h. einen Druckabbau in der Bremse des Rades, maßgebliche Schwellenwert variiert. Die Variation des Schwellenwertes erfolgt in Abhängigkeit vom Maß der Hochlaufbeschleunigung. Der Schwellenwert wird also momentan auf den sich aus der Hochlaufbeschleunigung ergebenden Wert erhöht und klingt dann in einer vorgegebenen Zeitfunktion (exponentiell oder linear) auf den Grundwert wieder ab. Der Grund-Schwellenwert ist derjenige Schwellenwert, den das System normalerweise einnimmt, d.h. dann, wenn die Hochlaufbeschleunigung des Rades unter dem obengenannten Grenzwert liegt oder keine Regelung durchgeführt wird.

Auch aus der US-PS 4 140 353 ist bereits ein Verfahren zum blockiergeschützten Bremsen bekannt, bei dem in Abhängigkeit von der Größe der Wiederbeschleunigung eines gebremsten Rades der für die Regelung maßgebliche Schwellenwert eingestellt wird.

Aus der DE 38 05 270 A1 sowie der entspechenden EP 0 329 071 A2 ist bereits ein Verfahren zum Regeln des Bremsdruckes in einer blockiergeschützten Fahrzeugbremsanlage bekannt, bei dem zur Vermeidung von unerwünschten, durch Achsschwingungen, Schlaglöcher od. dergl. bedingten Regelvorgängen der Schwellenwert zu Beginn einer Druckabsenkung oder -erhöhung während eines Regelzyklus kurzzeitig um einen konstanten Betrag gegenüber einem Grund-Schwellenwert heraufgesetzt wird. Danach wird der Schwellenwert in Abhängigkeit von der Zeitspanne des Druckabbaus im vorangegangenen Regelzyklus abgesenkt.

Die vorliegende Erfindung beruht auf einer weitergehenden Analyse des Phänomens der Achsschwingungen und schlägt einen ABS-Regelalgorithmus vor, der eine sichere Ausschaltung von durch Achsschwingungen verursachten unerwünschten ABS-Regelungen gewährleistet.

Die Achsen eines Kraftfahrzeuges bilden mit allen mit ihnen elastisch oder starr verbundenen übrigen Bauteilen ein schwingungsfähiges System (Feder-Masse-System), welches bei einer Auslenkung aus der Ruhelage Schwingungen mit beträchtlichen Amplituden ausführen kann. So ist bei vielen Fahrzeugen das Federbein (z.B. vom McPherson-Typ) der Vorderachse in Längsrichtung nur über einen Stabilisator (Federstab) geführt, der in Gummilagern gehalten ist.

Wird an einem solchen Rad nun ein Bremsmoment aufgebaut, so wird das durch die Achse und die zugehörigen Teile gebildete schwingungsfähige System entgegen der Fahrtrichtung ausgelenkt, so daß der eigentlichen Radgeschwindigkeit eine relative Achsgeschwindigkeit überlagert wird, die in diesem Fall negativ ist, d.h. es scheint so als würde das Rad abgebremst. In dieser Stellung ist das schwingungsfähige System vorgespannt und hat durch Verformung der Feder potentielle Energie aufgenommen.

Kommt es nun in dieser Situation im Rahmen einer ABS-Regelung zu einem Abbau des Bremsdruckes und damit einer Verringerung des Bremsmomentes, so wird die Fahrzeugachse in Fahrtrichtung beschleunigt. Das vorgespannte System aus Achse und zugehörigen Teilen löst sich nun aus der beschriebenen Extremlage und schwingt über die sogenannte Null-Lage (welche dem Ruhezustand der Achse entspricht) in Fahrtrichtung nach vorne.

Kommt es sodann im Rahmen einer ABS-Regelung wieder zu einem Aufbau des Bremsdruckes, so wird das Rad zunächst um die zusätzlich über die Null-Lage nach vorne geschwenkte Strecke verzögert, was allein schon zu einem Überschreiten des Verzögerungsschwellenwertes der ABS-Regelung führen kann. Würde die ABS-Regelung auf diese Verzögerung mit einem Druckabbausignal reagieren, käme es nicht nur zu einer uneffektiven Bremsung, sondern das System könnte sich auch wieder in Fahrtrichtung beschleunigen und es könnte die Achse sogar in einen resonanten Schwingungszustand geraten, der äußerst unerwünscht ist. Die Gefahr solcher Achsschwingungen besteht insbesondere auf Straßen mit hohen Reibbeiwerten. Der oben zitierte Stand der Technik hat erkannt, daß es in solchen Situationen zu starken Radwiederbeschleunigungen kommen kann, die dort als Anzeichen für Achsschwingungen herangezogen werden.

Der Erfindung liegt die Aufgabe zugrunde, bei einer blockiergeschützten Fahrzeugbremsanlage das Auftreten von Achsschwingungen zuverlässig erkennbar zu machen, so daß eine Beeinträchtigung der ABS-Regelung durch Achsschwingungen vermieden werden kann.

Bei modernen Kraftfahrzeug-Achsen liegen die Resonanz-Schwingfrequenzen je nach Fahrzeugtyp zwischen 7 und 15 Hz. Für einen gegebenen Fahrzeugtyp kann diese Resonanzfrequenz experimentell ermittelt werden, z.B. durch Auslenkung aus der Ruhelage und Messung der Schwingungsdauer.

Der vorliegenden Erfindung liegt die Erkenntnis zugrunde, daß eine genaue Beobachtung der Drehverzögerung eines zuvor stark wiederbeschleunigten Rades Aufschluß über mögliche Achsschwingungen liefern kann.

Hierzu wird erfindungsgemäß im Verlaufe einer aus mehreren Regelzyklen bestehenden ABS-Regelung für jeden Regelzyklus die Radwiederbeschleunigung beobachtet. Sobald in einem Regelzyklus eine besonders hohe Wiederbeschleunigung (eine Wiederbeschleunigung oberhalb des vorgegebenen Grenzwertes) festgestellt worden ist und überdies auch die Wiederbeschleunigung relativ rasch erfolgt ist, wird (anders als beim Stand der Technik, wo direkt aus der Wiederbeschleunigung auf eine Achsschwingung geschlossen wird) erfindungsgemäß eine weitere Messung durchgeführt und zwar bezüglich der Rad-Drehverzögerung im sich an die starke Wiederbeschleunigung unmittelbar anschließenden Regelzyklus.

Gemäß der Erfindung wird dann
- der hochgesetzte Schwellenwert für eine vorgegebene Zeitspanne beibehalten und dann wieder auf den Grundwert abgesenkt, wenn in dieser vorgegebenen Zeitspanne keine Radverzögerung gemessen wird und auch der Schwellenwert nicht überschritten wird, wobei die vorgegebene Zeitspanne etwas länger ist als eine Achs-Schwingungsperiode einer Fahrzeugachse, wohingegen dann, wenn
- der Schwellenwert innerhalb der vorgegebenen Zeitspanne unterschritten wird, dies keinen Abbau von Bremsdruck des Rades auslöst und die Zeitspanne gemessen wird, in welcher der Schwellenwert unterschritten bleibt und dann, wenn
- diese gemessene Zeitspanne kürzer ist als eine vorgegebene Zeitspanne, ein Abbau von Bremsdruck weiter unterbunden wird für eine zusätzliche Zeitspanne, die mindestens so lang ist wie eine typische Achs-Schwingungsperiode der Fahrzeugachse.

Der Erfindung liegt also die Erkenntnis zugrunde, daß für ein gegebenes Fahrzeug bei einer Achsschwingung die Verzögerung eines gebremsten Rades einen typischen schwingenden Verlauf hat, bei dem die Schwingungsperioden charakteristisch sind für die gegebene Fahrzeugachse, d.h. abhängig sind von der fahrzeugspezifischen Resonanzschwingung der Achse. Gemäß der Erfindung wird deshalb im Anschluß an eine extrem starke Wiederbeschleunigung (welche über einen vorgegebenen Vergleichswert liegt) der weitere Verlauf der Radverzögerung überwacht und dann, wenn innerhalb einer relativ kurzen vorgegebenen Zeitspanne, die z.B. etwas größer ist als die fahrzeugspezifische Resonanz-Schwingungsdauer der Achse, wieder ein schnelles Absenken der Fahrzeugverzögerung und ein anschließendes relativ schnelles Ansteigen der Fahrzeugverzögerung auftreten, auf das Vorhandensein einer Achsschwingung geschlossen und ein durch diese Achsschwingung ausgelöster unerwünschter Abbau von Bremsdruck am gebremsten Rad verhindert.

Diese Verhinderung der Auslösung unerwünschter Regelvorgänge kann z.B. dadurch erreicht werden, daß der für die Einleitung eines Druckabbaus maßgebliche Schwellenwert in Richtung auf ein unempfindlicheres Ansprechverhalten der ABS-Regelung verändert wird oder daß ganz einfach für eine vorgegebene Zeitspanne, die länger ist als eine resonante Schwingungsdauer der Achse, aber kürzer als die typische Dauer eines Regelzyklus, der Abbau von Bremsdruck ausgeschlossen wird.

Gemäß dieser erfindungsgemäßen Lösung wird also für das gegebene Fahrzeug ein der Resonanzschwingung der Achse zugeordneter Zeitwert ermittelt. Dieser Zeitwert entspricht einer Schwingungsperiode im Resonanzfall und läßt sich für jeden gegebenen Fahrzeugtyp experimentell ermitteln. Dieser Zeitwert wird für den gegebenen Fahrzeugtyp im Rechner der ABS-Anlage ein- und für allemal abgespeichert und steht für alle ABS-Regelungen zur Verfügung. Erfindungsgemäß wird somit im Anschluß an ein besonders hohes, über einem vorgegebenen Grenzwert liegendes Wiederbeschleunigungssignal im unmittelbar anschließenden Regelzyklus diejenige Zeitspanne gemessen, in der die Rad-Drehverzögerung unter einem vorgegebenen Grenzwert liegt, d.h. es wird diejenige Zeitspanne ermittelt, die zwischen dem Zeitpunkt liegt, in dem die Rad-Drehverzögerung den Grenzwert unterschreitet und dem Zeitpunkt, zu dem die Rad-Drehverzögerung diesen Grenzwert wieder überschreitet. Der Erfindung liegt die Erkenntnis zugrunde, daß diese Zeitspanne einen Aufschluß darüber gibt, ob sich die Fahrzeugachse in einem die ABS-Regelung erschwerenden Schwingungszustand befindet. Es wird deshalb die wie vorstehend beschrieben gemessene Zeitspanne mit dem abgespeicherten Zeitwert, welcher der halben Resonanz-Schwingungsdauer der Achse entspricht, verglichen, um bei Übereinstimmung innerhalb einer vorgegebenen Toleranz auf einen Achsschwingungszustand zu schließen. Ist ein solcher Achsschwingungszustand auf diese Weise erkannt worden, so kann er für die ABS-Regelung in vielfältiger Weise unschädlich gemacht werden, z.B. dadurch daß der Schwellenwert unempfindlicher eingestellt wird, und zwar für eine Zeitspanne, die zumindest etwas länger ist als eine Resonanz-Schwingungsdauer der Achse. Statt einer Anhebung des Schwellenwertes kann auch für eine vorgegebene Zeitspanne vorgesehen werden, daß der ABS-Rechner keine Absenkung des Bremsdruckes bewirkt, auch wenn in dieser Zeitspanne der Schwellenwert überschritten wird, was ansonsten eine Druckabsenkung zur Folge hätte.

Der vorstehend beschriebene ABS-Regelalgorithmus wird mit zeitgemäßer Technik dadurch realisiert, daß ein Prozessor entsprechend dem Algorithmus programmiert wird. Alle für die Realisierung der Erfindung erforderlichen Hardware-Komponenten, wie Prozessoren, Ventile, Steuermittel etc. sind in der ABS-Technik allgemein bekannt.

Ein für die Einleitung eines Druckabbaus maßgeblicher Schwellenwert kann etwa ein Schlupf-, Verzögerungs- oder Geschwindigkeits-Schwellenwert sein. Im folgenden wird exemplarisch ein Verzögerungsschwellenwert bei der Beschreibung eines Ausführungsbeispieles herangezogen.

Nachfolgend wird das erfindungsgemäße blockiergeschützte Bremsverfahren anhand der Zeichung näher erläutert. Es zeigt:
- Fig. 1: über einer gemeinsamen Zeitskala die Verläufe einer typischen Radgeschwindigkeit, Radverzögerung, Schwellwertänderung und des Zugehörigen Brensdruckes für eine blockiergeschützte Bremsung ohne Achsschwingungen und
- Fig. 2: eine der Fig. 1 entsprechende Darstellung für eine blockiergeschützte Bremsung, bei der Achsschwingungen auftreten.

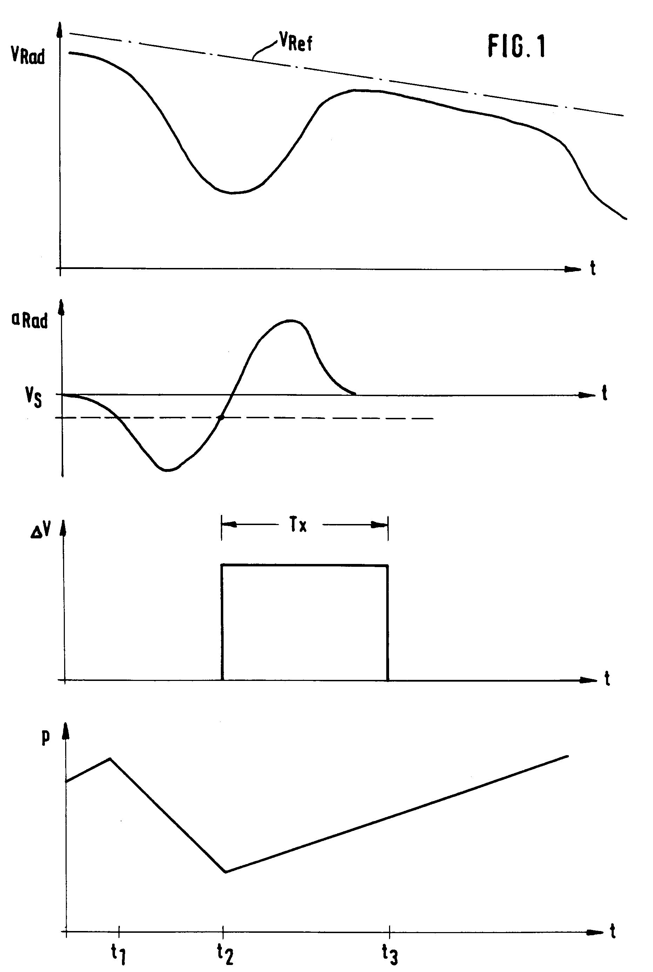

In Fig. 1 sind (von oben nach unten) über einer gemeinsamen Zeitskala (Zeit t) die Drehgeschwindigkeit v_{Rad} eines gebremsten Rades einschließlich der sogenannten Referenzgeschwindigkeit v_{Ref}, die zugehörige Verzögerung des gebremsten Rades (also die erste Ableitung der in der oberen Figur dargestellten Drehgeschwindigkeit über der Zeit) a_{Rad} einschließlich eines Vergleichswertes V_{S} bezüglich der Verzögerung, eine Änderung ΔV des Vergleichwertes und der zugehörige Bremsdruck p aufgetragen. Der Verlauf der Radgeschwindigkeit v_{Rad} in Fig. 1 (oben) zeigt, daß keine Achsschwingungen auftreten. Die Radgeschwindigkeit wird aufgrund einer Bremsung stark abgesenkt, so daß die Verzögerung a_{Rad} zum Zeitpunkt t₁ den Vergleichswert V_{S} unterschreitet und aufgrund des Abbaus des Bremsdruckes p sich die Radgeschwindigkeit v_{Rad} dann wieder "erholt" und auch die Verzögerung zu einer Beschleunigung wird, und den Vergleichswert V_{S} zum Zeitpunkt t₂ wieder überschreitet. Diese Erholung des Rades hat zur Folge, daß ab dem Zeitpunkt t₂ der Bremsdruck p wieder vergrößert wird.

Zum Zeitpunkt t₂ wird gemäß Fig. 1 auch der effektive Schwellenwert erhöht, d.h. zum zunächst eingestellten Vergleichswert V_{S} wird ab dem Zeitpunkt t₂ ein zusätzlicher Betrag ΔV addiert, der eine unempfindlichere ABS-Regelung zur Folge hat. Mit anderen Worten: in Abhängigkeit von der Zeit wird gemäß Fig. 1 der "normale" Vergleichswert V_{S} um einen zusätzliche Betrag ΔV erhöht, so daß für die Zeitspanne Tₓ, in welcher der erhöhte Wert ΔV wirksam ist, die effektive Schwelle deutlich heraufgesetzt ist und somit ein Überschreiten dieser Schwelle deutlich unwahrscheinlicher ist und somit der Druckabbau zumindest für die Zeitspanne Tₓ in der Regel ausgeschlossen ist.

Die Erhöhung des Vergleichswertes V_{S} um den zusätzlichen Betrag ΔV zur Erzielung eines effektiven Schwellenwertes V_{S} + ΔV wird aber nur dann vorgenommen, wenn die Wiederbeschleunigung a_{Rad} des gebremsten Rades verhältnismäßig rasch, also in einer realtiv kurzen Zeitspanne nach dem Zeitpunkt t₁ erfolgt. Es wird also ermittelt, ob die Wiederbeschleunigung des Rades über einen vorgegebenen Vergleichswert liegt und ob die Zeitspanne zwischen den Zeitpunkten t₁ und t₂ so kurz ist, daß dies die Möglichkeit des Vorliegens einer Achsschwingung anzeigt. Daß heißt, die Zeitspanne von t₁ - t₂ liegt dann etwa im Bereich einer halben Schwingungsdauer einer resonanten Achsschwingung. Dabei sind Toleranzen, d.h. Abweichungen von der fahrzeugspezifischen resonanten Achs-Schwingungsdauer zugelassen.

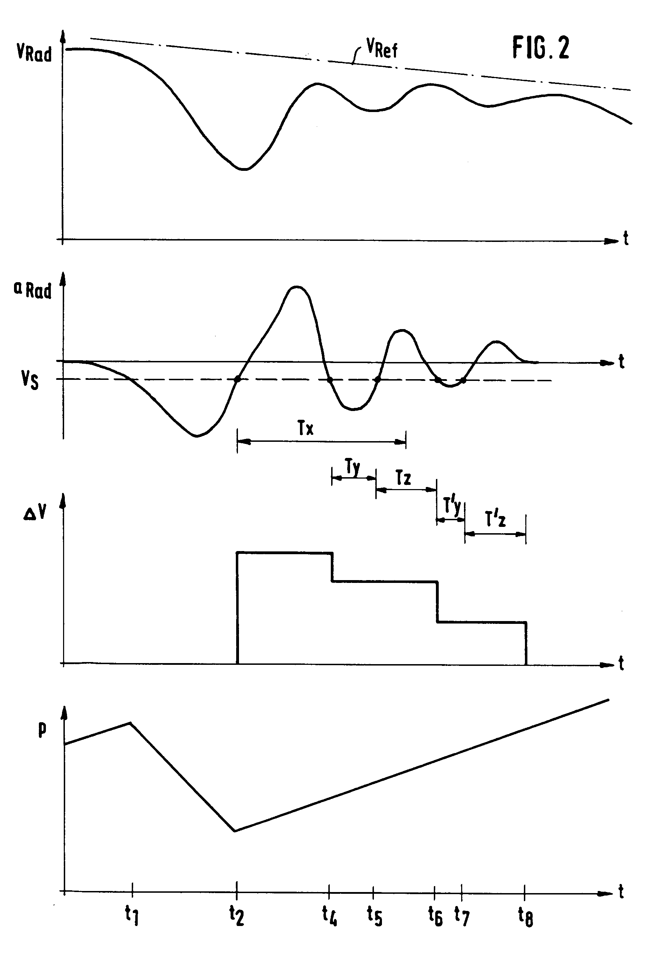

Zum Zeitpunkt t₂ geht also der erfindungsgemäße ABS-Regelalgorithmus davon aus, daß eine gewisse Wahrscheinlichkeit dafür gegeben ist, daß die Achse des gebremsten Rades sich in einem Schwingungszustand befindet. Damit im Anschluß an den Zeitpunkt t₂ die Achsschwingung keinen unerwünschten Abbau von Bremsdruck p (vgl. Fig. 1, unteres Bild) verursacht, wird zum Zeitpunkt t₂ der effektive Schwellenwert auf den Betrag V_{S} + ΔV gesetzt und zwar für eine Zeitspanne Tₓ (Fig. 1), die zunächst etwas größer ist als eine typische resonante Schwingungsdauer der Achse (vgl. auch Fig. 2). Beim in Fig. 1 dargestellten Fall kommt es im Anschluß an den Zeitpunkt t₂ zu keiner Fortsetzung der Achsschwingung, d.h. die Drehgeschwindigkeit a_{Rad} des gebremsten Rades hat einen "normalen" Verlauf und nähert sich nach dem Abbau des Bremsdruckes und im Anschluß an den Zeitpunkt t₂ wieder mit zunehmendem Bremsdruck in der üblichen Weise der Referenzgeschwindigkeit v_{Ref}.

Dies hat zur Folge, daß in der sich an den Zeitpunkt t₂ anschließenden Zeitspanne Tₓ keine Absenkung der Verzögerung a_{Rad} des Rades unter den Vergleichswert V_{S} auftritt. Der den ABS-Regelalgorithmus ausführende Computer wertet dies so, daß keine Achsschwingung auftritt, weshalb nach Ablauf der Zeitspanne Tₓ, also zum Zeitpunkt t₃, die Erhöhung des Schwellenwertes um den Betrag ΔV wieder rückgängig gemacht wird und der Vergleichswert V_{S} als der "normale" Schwellenwert wirksam ist.

Fig. 2 zeigt eine Darstellung, bei der es zu einer Achsschwingung kommt. Die Vorgänge bis zum Zeitpunkt t_{z} sind wie vorstehend anhand von Fig. 1 beschrieben. Zwischen den Zeitpunkten t₁ und t₂ hat somit eine rasche (das heißt innerhalb eines relativ kurzen Zeitintervalls auftretende) Wiederbeschleunigung des Rades stattgefunden, die auch über einem relativ hohen Extremwert lag, so daß zum Zeitpunkt t₂ der wirksame Schwellenwert um den Betrag ΔV hochgesetzt wird. Diese Hochsetzung des Schwellenwertes erfolgt zunächst wieder für die Zeitspanne Tₓ. Anders als beim in Fig. 1 dargestellten Verlauf der Radgeschwindigkeit tritt aber bei Fig. 2 aufgrund einer Achsschwingung zum Zeitpunkt t₄ ein erneutes Unterschreiten der Radverzögerung a_{Rad} unter dem Vergleichswert Vₛ auf, was der ABS-Computer als starken Indikator dafür wertet, daß eine Achsschwingung vorliegt. Sodann wird die Zeitspanne T_{y} gemessen, in welcher die Radverzögerung a_{Rad} unter dem Vergleichswert V_{S} liegt (vgl. Fig. 2). Dies ist die Zeitspanne zwischen den Zeitpunkten t₄ und t₅.

Gemäß einer ersten Ausführungsvariante der Erfindung verlängert der ABS-Computer im Anschluß an den Zeitpunkt t₅ die Zeitspanne, in welcher der effektive Schwellenwert um einen zusätzlichen Betrag ΔV heraufgesetzt ist, um eine weitere Zeitspanne T_{z}, wobei die Zeitspanne T_{z} abhängig ist von der zuvor gemessenen Zeitspanne zwischen den Zeitpunkten t₄ und t₅, also der Zeitspanne T_{y}. Wie dargestellt ist, ist die gesetzte Zeitspanne T_{z} etwas länger als die gemessene Zeitspanne T_{y}.

Im allgemeinen wird eine Achsschwingung als gedämpfte Schwingung auftreten, wie auch in Fig. 2 angenommen ist. Dies bedeutet, daß sich die Amplituden des zeitlichen Verlaufs der Radverzögerung a_{Rad} verkleinern. Dementsprechend kann im Anschluß an ein erstmaliges Heraufsetzen des effektiven Schwellenwertes um den Betrag ΔV zum Zeitpunkt t₂ bei jedem anschließenden Unterschreiten des Vergleichswertes V_{S} zu den Zeitpunkten t₄, t₆ etc. der Betrag der Erhöhung ΔV des Schwellenwertes herabgesetzt werden, wie in Fig. 2 ebenfalls dargestellt ist.

Beim in Fig. 2 dargestellten Ausführungsbeispiel schwingt die Achse des gebremsten Rades auch über den Zeitpunkt t₅ hinaus noch weiter, allerdings mit gedämpfter Amplitude. Dies hat zur Folge, daß innerhalb der Zeitspanne T_{z} die Radverzögerung a_{Rad} wiederum den Vergleichswert V_{S} unterschreitet, was dem ABS-Computer als Anzeichen dafür dient, daß sich die Achsschwingung fortsetzt. Dementsprechend wird dann die Zeitspanne T'_{y} gemessen, d.h. die Zeitspanne zwischen den Zeitpunkten t₆ und t₇. Im Anschluß an den Zeitpunkt t₇ setzt deshalb der ABS-Computer den effektiven Schwellenwert V_{S} + ΔV noch nicht auf den "Normalwert" (also V_{S}), sondern läßt weiter eine Erhöhung des effektiven Schwellenwertes wirksam sein und zwar für eine Zeitspanne T'_{z}, die hier ebenfalls etwa gleich einer halben Schwingungsdauer einer Resonanzschwingung der Achse gesetzt ist. Erst im Anschluß an den Zeitpunkt t₇ beruhigt sich die schwingende Achse wieder hinreichend, so daß innerhalb der Zeitspanne T'_{z} keine Unterschreitung des Vergleichswertes V_{S} erfolgt, weshalb zum Zeitpunkt t₈ die Erhöhung des Schwellenwertes aufhört.

In Abwandlung des vorstehend beschriebenen Ausführungsbeispieles ist es auch möglich, die zwischen den Zeitpunkten t₄ und t₅ gemessene Zeitspanne T_{y} in der die Radverzögerung a_{Rad} den Vergleichswert V_{S} unterschreitet, zu messen und mit einer zuvor für den gegebenen Fahrzeugtyp ein- und für allemal abgespeicherten Vergleichszeitspanne zu vergleichen, die typisch ist für eine Achsschwingung des gegebenen Fahrzeuges. Ergibt dieser Vergleich, daß eine hinreichende Übereinstimmung zwischen der gemessenen Zeitspanne T_{y} und dem Vergleichswert besteht, so schließt der ABS-Computer daraus, daß eine Achsschwingung vorliegt und bewirkt ab dem Zeitpunkt t₄, daß für eine bestimmte Zeitspanne ein Abbau des Bremsdruckes p verhindert ist. Diese bestimmte Zeitspanne wird so bemessen, daß sie hinreichend lang ist, um eine typische gedämpfte Achsschwingung voll zu erfassen, aber kürzer ist als eine typische Dauer eines Regelzyklus in einer ABS-Regelung.

Im in den Fig. 1 und 2 dargestellten Ausführungsbeispiel ist die Erhöhung ΔV des Schwellenwertes als Stufenfunktion in Abhängigkeit von der Zeit dargestellt. In Abwandlung dieses Ausführungsbeispieles der Erfindung ist es auch möglich, die Erhöhung
ΔV des effektiven Schwellenwertes in Abhängigkeit vom Druck p einzustellen. Mit zunehmenden Druck wird die Erhöhung des Schwellenwertes abgesenkt, weil mit zunehmenden Druck sich auch die Radgeschwindigkeit der Fahrzeug-Referenzgeschwindigkeit v_{Ref} annähert und die ABS-Regelung wieder den typischen "Normalschwellenwert" annehmen sollte.

## Patentansprüche

1. Verfahren zum blockiergeschützten Abbremsen der Räder eines Fahrzeugs, bei dem
a) das dynamische Radverhalten gemessen und daraus Schlupf und Drehgeschwindigkeitsänderungen festgestellt werden;
b) die daraus gewonnenen Signale beim Überschreiten von zugeordneten Schwellenwerten zu einem Abbau, Konstanthalten oder Wiederanstieg des Bremsdrucks dienen;
c) während aufeinanderfolgenden Regelzyklen des Blockierschutzes die jeweiligen Niederbeschleunigungen der Räder gemessen werden;
d) der Grundschwellenwert zu Beginn des Wiederanstiegs des Bremsdrucks erhöht wird, um ein Auslösen von unerwünschten Regelvorgängen durch Achsschwingungen zu verhindern oder einen Bremsdruckabbau für eine vorgegebene Zeitspanne zu unterbinden;
e) der hochgesetzte Schwellenwert innerhalb des Regelspiels auf den Grundschwellenwert zurückgeführt wird, dadurch gekennzeichnet, daß
f1) der hochgesetzte Schwellenwert (Vₛ + ΔV) für eine vorgegebene Zeitspanne (Tₓ) beibehalten und dann wieder auf seinen Grundwert (V_{S}) abgesenkt wird, wenn in der vorgegebenen Zeitspanne (Tₓ) keine Radverzögerung (a_{Rad}) gemessen wird, die einen Vergleichswert (Vₛ) bezüglich der Verzögerung unterschreitet, wobei die vorgegebene Zeitspanne (Tₓ) etwas länger ist als eine Schwingungsperiode der Fahrzeugachse,
f2)
a) dann, wenn die Radverzögerung (a_{Rad}) innerhalb der vorgegebenen Zeitspanne (Tₓ) wieder unter den Vergleichswert (Vₛ) abfällt, dieser Abfalls keinen Abbau des Bremsdrucks auslöst, wobei
b) eine Zeitspanne (T_{y}) gemessen wird, in welcher die Verzögerung des gebremsten Rades (a_{Rad}) unter dem Vergleichswert (Vₛ) liegt, und
f3) dann, wenn diese gemessene Zeitspanne (T_{y}) kürzer ist als eine vorgegebene Zeitspanne (T_{ymax}), ein Abbau des Bremsdrucks weiter unterbunden wird für eine zusätzliche Zeitspanne (T_{y} + T_{z}), die mindestens so lang ist wie eine Schwingungsperiode der Fahrzeugachse.

## Claims

1. An anti-lock braking method to retard the wheels of a vehicle, wherein
(a) the dynamic wheel behavior is measured and slip as well as variations of rotational speed are determined on the basis thereof;
(b) the signals thus obtained serve for a reduction of the brake pressure, for maintaining it constant, or for the renewed rise thereof when associated threshold values are exceeded;
(c) the respective renewed accelerations of the wheels are measured during successive control cycles of the anti-lock protection;
(d) the basic threshold value is increased at the beginning of the renewed rise of the brake pressure to prevent initiation of undesired control operations due to axle oscillations or to prohibit a reduction in brake pressure for a given period of time;
(e) the raised threshold value is returned to the basic threshold value within the control cycle,
**characterized** in that
(f1) the raised threshold value (V_{S} + ΔV) is maintained for a given period of time (Tₓ) and then lowered once more to its basic value (V_{S}) if no wheel retardation (a_{Rad}) failing to reach a comparative value (V_{S}) in respect of retardation is measured during the given period of time (Tₓ), the given period of time (Tₓ) being somewhat longer than one oscillation period of the vehicle axle,
(f2)
(a) in case the wheel retardation (a_{Rad}) again drops below the comparative value (V_{S}) within the given period of time (Tₓ), this diminuation does not cause a reduction in brake pressure,
(b) a period of time (T_{y}) being measured during which the deceleration of the retarded wheel (a_{Rad}) lies below the comparative value (V_{S}), and
(f3) in case this measured period of time (T_{y}) is shorter than a predetermined period of time (T_{ymax}), reduction of the brake pressure continues to be precluded for an additional period of time (T_{y} + T_{z}) which is at least as long as one oscillation period of the vehicle axle.

## Revendications

1. Procédé de freinage anti-blocage des roues d'un véhicule, selon lequel :
a) le comportement dynamique de la roue est mesuré, et on en déduit un patinage ou des modifications de la vitesse de rotation;
b) les signaux ainsi obtenus en cas de dépassement de valeurs de seuil associées, servent à abaisser, à maintenir constante ou à faire remonter la pression de freinage;
c) pendant des cycles de régulation successifs de la protection anti-blocage, chacune des réaccélérations correspondantes des roues est mesurée;
d) au début de la remontée de la pression de freinage, la valeur de seuil prise pour base est portée à un niveau plus élevé, pour empêcher le déclenchement d'opérations de régulation indésirables, du fait d'oscillations de l'essieu, ou pour interdire un abaissement de la pression de freinage pour un espace de temps prédéfini;
e) la valeur de seuil qui a été portée à un niveau plus élevé à l'intérieur du cycle de régulation, est ramenée à la valeur de seuil prise de base,
caractérisé en ce que
f1) la valeur de seuil portée à un niveau plus élevé (V_{S} + Δ_{V}) y est maintenue pour un espace de temps prédéfini (Tₓ), puis est ensuite ramenée à sa valeur de base (V_{S}) si, pendant l'espace de temps prédéfini (Tₓ), on n'a mesuré aucune décélération (a_{Roue}) de la roue, qui soit inférieure à une valeur de comparaison (V_{S}), par rapport à la décélération, étant entendu que l'espace de temps prédéfini (Tₓ) est un peu plus grand qu'une période d'oscillation de l'essieu de roue,
f2)
a) ensuite, quand la décélération (a_{Roue}) de la roue, à l'intérieur de l'espace de temps prédéfini (Tₓ), redevient inférieure à la valeur de comparaison (V_{S}), cette chute n'entraîne aucun abaissement de la pression de freinage, et
b) un espace de temps (T_{y}) est mesuré, pendant lequel la décélération (a_{Roue}) de la roue freinée est inférieure à la valeur de comparaison (V_{S}), et
f3) ensuite, si cet espace de temps (T_{y}) est plus court qu'un espace de temps (T_{ymax}) prédéfini, un abaissement de la pression de freinage est de nouveau interdit pour un espace de temps supplémentaire (T_{y} + T_{z}), qui est au moins aussi long qu'une période d'oscillation de l'essieu de roue.
